(19)

**Europäisches Patentamt**
**European Patent Office**
**Office européen des brevets**

(11)　**EP 4 704 080 A1**

(12)　**EUROPEAN PATENT APPLICATION**

(43) Date of publication:
 **04.03.2026　Bulletin 2026/10**

(21) Application number: **25197706.2**

(22) Date of filing: **22.08.2025**

(51) International Patent Classification (IPC):
 **G10L 17/26** (2013.01)　　**G10L 17/10** (2013.01)
 **G06F 21/32** (2013.01)　　**G10L 17/00** (2013.01)
 **H04W 12/06** (2021.01)　　**H04W 12/12** (2021.01)

(52) Cooperative Patent Classification (CPC):
 **G10L 17/26; G06F 21/32; G10L 17/10;**
 H04W 12/06; H04W 12/12

(84) Designated Contracting States:
 **AL AT BE BG CH CY CZ DE DK EE ES FI FR GB**
 **GR HR HU IE IS IT LI LT LU LV MC ME MK MT NL**
 **NO PL PT RO RS SE SI SK SM TR**
 Designated Extension States:
 **BA**
 Designated Validation States:
 **GE KH LA MA MD TN**

(30) Priority:　**02.09.2024　IT 202400019534**

(71) Applicant: **FXT Digital S.r.l.**
 **15057 Tortona (AL) (IT)**

(72) Inventor: **REGONDI, Stefano Gaspare Luigi**
 **20133 Milano (MI) (IT)**

(74) Representative: **Praxi Intellectual Property Milano**
 **Via Mario Pagano, 69/A**
 **20145 Milano (IT)**

(54)　**VOICE FILE AUTHENTICATION METHOD**

(57)　Method (100) for authenticating voice files comprising: defining (101) a plurality of voice biomarkers ($BM_1$ -$BM_M$ ) chosen from among the following types: pitch, intensity, formant, Mel Cepstral Distance, Sound of Silence; providing (102) a voice file to be authenticated ($FAU_X$ ); extracting (103) at least two voice biomarkers ($BM_1$ -$BM_M$) from the voice file to be authenticated ($FAU_X$). In addition, the method comprises calculating (104) from said at least two voice biometrics ($BM_1$ -$BM_M$) an authentication index (INDX) such as to take values within an authentication interval (INT) having one end indicative of a situation in which the voice file to be authenticated ($FAU_{NRV}$ ) has a non-natural origin and another extreme indicative of another situation in which the voice file to be authenticated ($FAU_{NV}$ ) has a natural origin.

100

**FIG. 1**

EP 4 704 080 A1

**Description**

**TECHNICAL FIELD**

The present invention relates to a method for distinguishing voice files of natural origin from voice files of non-natural origin, such as digitally synthesised or modified voice files. In particular, it refers to the human voice.

**STATE OF THE ART**

In recent years, advances in voice technology and artificial intelligence have led to a significant increase in the use of synthetic and manipulated voices. This phenomenon raises important concerns, especially when it comes to critical voice communications in the field of security.

The threats associated with the use of artificial voices go beyond fraud and information manipulation; they extend to potential infiltration into official communication networks, jeopardising the security and integrity of sensitive information. In this context, it is essential to develop tools and methodologies capable of accurately identifying the authenticity of voices in official communications.

However, this distinctive feature of the voice brings with it new challenges, especially in contexts where communication security is of paramount importance. This makes the voice and its artificial derivatives susceptible to misuse, making it essential to develop tools that protect both the authenticity of voice communications and privacy.

Known techniques for discriminating between natural and synthesised voices and/or the reliability of modified voices or those derived from simultaneous translations use analysis methods based on the physical characteristics of voice signals, drawing on techniques typical of signal theory.

**SUMMARY OF THE INVENTION**

The purpose of this invention is to propose a method for authenticating a voice file, i.e., to distinguish whether it is a file of natural origin (e.g., a real human voice) or non-natural (synthesised or digitally modified voice) that is alternative to those known and, preferably, more reliable.

The present invention relates to a method for authenticating voice files as defined in claim 1 and its particular embodiments described in dependent claims 2-10. According to another object, the present invention relates to an authentication system as defined in claim 11.

**BRIEF DESCRIPTION OF THE FIGURES**

The structural and functional features of the invention can be better understood from the detailed description below, which refers to the accompanying drawings, which represent some preferred but not limiting embodiments, in which:

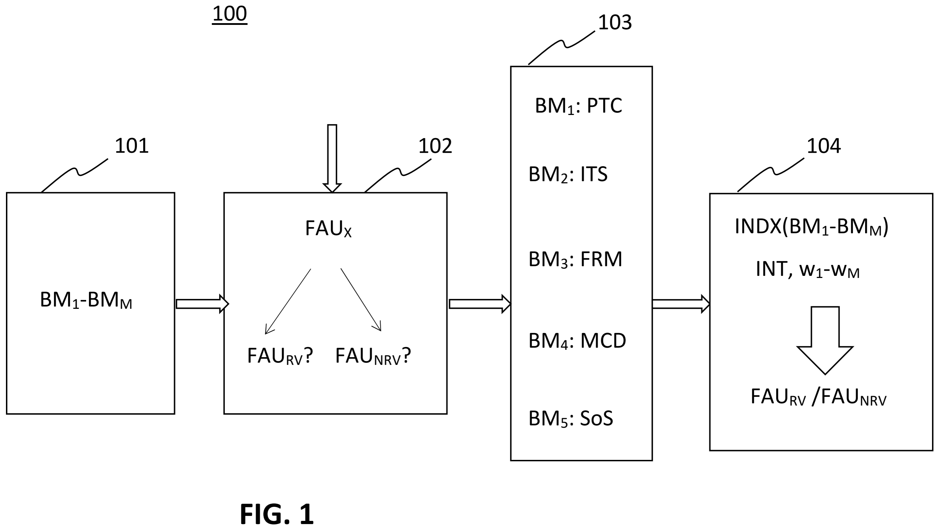

Figure 1 shows, by means of a flow chart, an example of a method for authenticating a voice file that reproduces the human voice;
Figure 2 shows, by means of a flow chart, an example of a configuration method for said method;
Figure 3 shows, by way of example, for two sample natural voice files and two sample non-natural voice files, the corresponding waveforms, spectrogram, pitch pattern and intensity pattern;
Figure 4A shows histograms of pitch values calculated for the sample files of natural and unnatural speech.
Figure 4B shows a difference in pitch for each pair of natural and non-natural voice sample files in Figure 4A;
Figure 5A shows histograms of intensity values calculated for each of the sample files of natural and non-natural speech;
Figure 5B shows a difference in intensity for each pair of natural and non-natural voice sample files in Figure 5A;
Figure 6A shows, by means of histograms, the first formant values calculated for each of the natural and non-natural voice sample files
Figure 6B shows a difference in the first formant for each pair of natural and non-natural voice sample files in Figure 6A;
Figure 7 shows a comparison and statistical analysis of Mel Cepstral Distance values for the natural voice sample files and for the synthetic voice files;
Figure 8 shows the probability distribution of moments of silence in the reference population (real voice) for the Sound of Silence biomarker and the corresponding Benford law (dashed line) compared to synthetic data (solid line).

## DETAILED DESCRIPTION

A form of implementation of a voice file authentication method 100 is described below.

Method 100 comprises a voice biomarker definition phase 101 in which a plurality of voice biomarkers $BM_{(1)}$ -$BM_M$ are defined from the group comprising: pitch PTC, intensity ITS, formants FRM, Mep Cepstral Distance MCD, Sound of Silence SoS.

It is well known how to calculate the above-listed voice biomarkers, as they are often used in the medical field. Pitch PTC (fundamental frequency in Hz) provides information on the fundamental frequency of the voice, while intensity ITS measures the level of acoustic energy. Formants FRM reflect vocal resonances and the timbral characteristics of sound.

The MCD biomarker measures the differences between MFCC (Mel Frequency Cepstral Coefficient) vectors, which capture the spectral characteristics of the voice signal. The Sound of Silence biomarker examines the pattern and distribution of silences within voices. These biomarkers $BM_1$ -$BM_M$ will be further described in the presentation of experimental results below.

Please note that only some or all of the voice biomarkers $BM_1$ -$BM_M$ (hereinafter referred to as biomarkers for brevity) listed above may be selected. Method 100 requires the use of at least two of these biomarkers $BM_1$ -$BM_M$. Preferably, all the biomarkers described are used. In addition, additional biomarkers not described here may also be used.

The authentication method 100 also includes a reception phase 102 of a voice file to be authenticated $FAU_X$, i.e. a human voice audio file for which an indication must be provided on the probability that it has a natural origin or a synthetic or artificial origin (e.g. derived from TTS systems or processing using Hifi-GAN). The voice file has a natural origin ($FAU_{RV}$) if it is the result of a recording and digital conversion obtained directly from a natural human voice. The voice file has a non-natural origin ($FAU_{NRV}$) if it is originally generated in a non-natural way (e.g. by electronic synthesis) or is the result of significant digital alterations to the natural voice. The non-natural voice file $FAU_{NRV}$ may have been created to reproduce as closely as possible the characteristics of a natural voice of a specific individual.

Voice files that can be processed by method 100 are audio files that, for example, have one of the following formats: MP3, AAC, Vorbis, FLAC and Opus. A non-natural voice file can be obtained, for example, from the Hifi-GAN (Generative Adversarial Networks) algorithm. As will be clarified later, method 100 is applicable to voices in different languages .

In an extraction phase 103, the selected biomarkers $BM_1$ -$BM_M$ are calculated by appropriately processing the voice file to be authenticated $FAU_X$. For example, all five biomarkers listed above are calculated: pitch PTC, intensity INT, formants FRM, MCD, Sound of Silence SoS. The biomarkers $BM_1$ -$BM_M$ are calculated by processing the voice file $FAU_X$,extracting characteristic parameters and applying the formulas that define these biomarkers.

Before the extraction phase 103, it is possible to pre-process the voice file to be authenticated $FAU_X$ in order to reduce noise or convert its format.

Preferably, each biomarker $BM_1$ -$BM_M$ is calculated so as to be normalised, i.e. so that it takes possible values within a predefined range, which is the same for each biomarker. For example, the predefined range varies from 1 to 25.

Method 100 also includes a calculation phase 104 of an authentication index INDX representative of a probability that the voice file to be authenticated $FAU_X$ is a natural voice file. In particular, the authentication index INDX can take values within an authentication range INT having one extreme (for example, the lower extreme) indicative of a situation in which the voice file has a non-natural origin and another extreme indicative of the opposite situation, i.e., in which the voice file has a natural origin. For example, a minimum value (in particular zero) of the authentication index INDX indicates the maximum probability that the voice file to be authenticated $FAU_X$ is of non-natural origin, while a maximum value of the authentication interval INT indicates the maximum probability that the voice file to be authenticated $FAU_X$ is of natural origin.

The authentication index INDX is calculated as a combination of the values of the selected biomarks $BM_1$ -$BM_M$. This combination may take into account different weights for the calculated biomarks, depending on their significance for the purpose of discriminating between natural and non-natural voice.

According to a particular form of implementation, an index INDX is used that varies within an range INT from 0 to 100, where the value 0 means that the voice file to be authenticated $FAU_X$ is of non-natural origin and the value 100 means that the voice file to be authenticated $FAU_X$ is of natural origin. The INDX index is, for example, in the form of a score.

According to a particular form of implementation, the combination used is a sum of the values of the biomarkers $BM_1$ -$BM_M$ , appropriately weighted with a weight $w_1$ -$w_M$ . Following a statistical analysis to be carried out on each biomarker $BM_1$ -$BM_M$ ,it is possible to choose the weight wj to be associated with each biomarker in the above sum. According to a preferred form resulting from experiments, for the biomarkers pitch PTC, intensity ITS, formants FRM and Sound of Silence SoS, the same weight $w_1$ is used, while for the biomarker Mep Cepstral Distance MCD, a weight $w_2$ is used, which is higher than that of the others, for example, equal to four times $w_1$ According to a numerical example (relating to the INT 0-100 interval), $w_{1\,=}\,0.5$ and $w_{2\,=}\,2$.

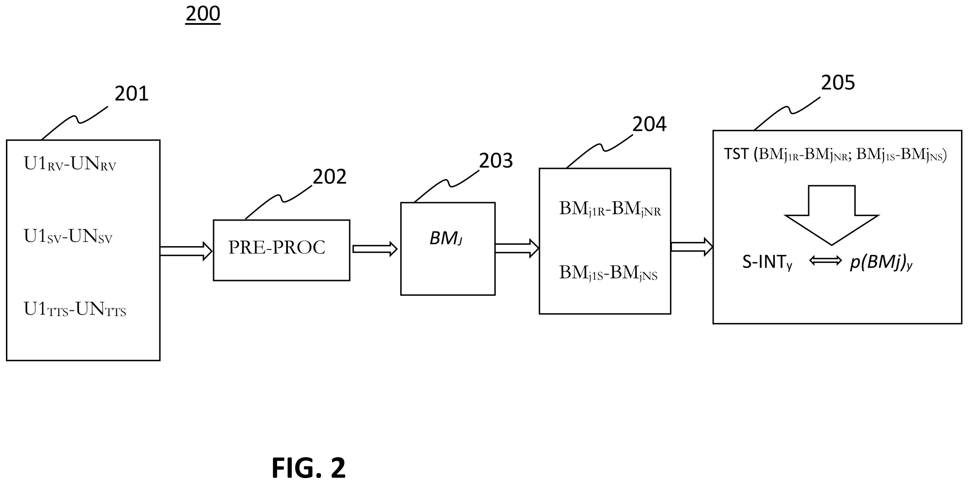

With regard to the configuration of method 100, i.e. the choice of biomarkers $BM_1$ -$BM_M$ and the choice of their

weights $w_1$ -$w_M$, Figure 2 schematically shows a configuration method 200 based on the statistical analysis of sample files with natural and non-natural speech.

The configuration method 200 comprises a phase 201 of receiving a plurality of natural voice sample files $U1_{RV}$ -$UN_{RV}$ and at least a plurality of non-natural voice sample files $U1_{SV}$ -$UN_{SV}$.

The sample voice files natural-voice $U1_{RV}$ -$UN_{RV}$ are, for example, a number N of voice files obtained from voice recordings (e.g., human and in Italian) of different individuals. For example, the sample non-natural voice files $U1_{SV}$ -$UN_{SV}$ are voice files generated using a synthesis algorithm (e.g. the aforementioned Hifi-GAN algorithm) from the natural voice sample files $U1_{RV}$ -$UN_{RV}$. Advantageously, in addition to or in place of the non-natural voice sample files $U1_{SV}$ -$UN_{SV}$, it is also possible to have an additional set of non-natural voice sample files $U1_{TTS}$ -$UN_{TTS}$ with different voices obtained through text-to-speech. Text-to-speech synthesis systems convert written text into speech.

Furthermore, according to one possible embodiment, a data set of natural voices and synthesised voices in different languages (Arabic, English, Russian, French) may also be considered, as experimentally carried out by the Applicant.

In a preferred further filtering stage 202 (PRE-PROC ), the natural voice sample files $U1_{RV}$-$UN_{RV}$ are pre-processed in order to remove noise and/or standardise their format.

In a definition phase 203, a selected biomarker BMj is taken into consideration, chosen from among the biomarkers $BM_1$ -$BM_M$ already defined.

In a further extraction phase 204, a first plurality of values/trends $BM_{j1R}$ -$BM_{jNR}$ assumed by the biomarker BMj for each of the natural voice sample files $U1_{RV}$ -$UN_{RV}$ is calculated. In addition, a second plurality of values/trends $BM_{j1S}$ -$BM_{jNS}$ assumed by the biomarker BMj for each of the non-natural voice sample files $U1_{SV}$ - $UN_{SV}$ and/or by the further set of non-natural voice sample files $U1_{TTS}$ -$UN_{TTS}$ is calculated.

In an analysis phase 205, based on inferential statistics, a statistical comparison analysis (using a TST test) is performed between the first set of values/trends of the $BM_{j1R}$ -$BM_{jNR}$ biomarkers and the second set of values/trends of the BM $BM_{j1S}$ -$BM_{jNS}$ biom$_{arkers}$. This inferential analysis 205 allows the selected biomarker BMj to be defined in terms of its significance for the purpose of discriminating between natural voice files and non-natural voice files.

Preferably, this significance is assessed by calculating the p-value, which, as is known, is the probability, for a hypothesis assumed to be true (called the null hypothesis), of obtaining results that are equally or less compatible with those observed during the test, with the aforementioned hypothesis.

This statistical analysis 205 allows the selected biomarker $BM_j$ to be defined, within its range of variation (e.g. 0.00 - 25.00), as several sub-ranges $S$-$INT_1$ -$SINT_Q$ (e.g., four sub-intervals) and assess which sub-intervals refer to more significant values (lower *p-values*) and which refer to less significant values (higher *p-values*).

Statistical analysis 205 may be an ANOVA analysis, Analysis of Variance, suitable, for example, for the following types of biomarkers: pitch, intensity, formants. In addition, statistical analysis 205 may be an analysis according to a *t-test* suitable, for example, for the Mel Cepstral Distance (MCD) type of biomarker.

Furthermore, statistical analysis 205 can be performed by calculating Benford's law for the first set of biomarker values $BM_{j1R}$ -$BM_{jNR}$, followed by calculating a mean square error between Benford's law and data dependent on the second set of biomarkers $BM_{j1S}$ -$BM_{jNS}$. This method is, for example, preferable for evaluating the Sound of Silence biomarker.

The analysis phase 205 is advantageously carried out for each biomarker of interest from the set $BM_1$ -$BM_M$.

The following (Tables 1-5) show, by way of example, for each biomarker described, the sub-intervals of variation associated with *the p-value* obtained from the statistical analysis carried out experimentally by the Applicant, as described below.

| TABLE 1 | | |
|---|---|---|
| **Pitch** | **Description** | **Reference *p*-value** |
| 0,00 - 6,25 | High tone variation (Hz) | P<0.0001 |
| 6,25 - 12,5 | Moderate tone variation (Hz) | P<0.001 |
| 12.,5 - 18,65 | Low tone variation (Hz) | P<0.01 |
| 18,65 - 25 | Natural tone variation (Hz) | P<0.1 |

| TABLE 2 | | |
|---|---|---|
| **Intensity** | **Description** | **Reference *p* value** |
| 0,00 - 6,25 | High intensity variation (dB) | P<.0001 |

(continued)

| TABLE 2 | | |
|---|---|---|
| **Intensity** | **Description** | **Reference *p* value** |
| 6,25 - 12,5 | Moderate intensity variation (dB) | P<0.001 |
| 12,5 - 18,65 | Low intensity variation (dB) | P<0.01 |
| 18,65 - 25 | Intensity tone variation (dB) | P<0.1 |

| TABLE 3 | | |
|---|---|---|
| **Formants** | **Description** | **Reference *p* value** |
| 0,00 - 6,25 | High harmonic variation (Hz) | P<0.0001 |
| 6,25 - 12,5 | Moderate harmonic structure variation (Hz) | P<0.001 |
| 12,5 - 18,65 | Low harmonic structure variation (Hz) | P<0.01 |
| 18,65 - 25 | Harmonic structure tone variation (Hz) | P<0.1 |

| TABLE 4 | | |
|---|---|---|
| **MCD** | **Description** | **Reference *p* value** |
| 0,00 - 6,25 | High MCD stamp | P<0.0001 |
| 6,25 - 12,5 | Moderate MCD stamp | P<0.001 |
| 12,5 - 18,65 | Low MCD stamp | P<0.01 |
| 18,65 - 25 | Natural MCD timbre | P<0.1 |

| TABLE 5 | | |
|---|---|---|
| **Sound of Silence** | **Description:** | **Reference *p* value** |
| 0,00 - 6,25 | High first digit distribution deviation | P<0.0001 |
| 6,25 - 12,5 | Moderate first digit distribution deviation | P<0.001 |
| 12,5 - 18,65 | Low first digit distribution deviation | P<0.01 |
| 18,65 - 25 | Negligible first digit distribution deviation | P<0.1 |

Below is an example of inferential statistical analysis 205 for each of the $BM_1$ - $BM_M$ biomarkers listed above. These experiments led to the definition of Tables 1-5 shown above.

**1. Experiments: analysis of vocal biomarkers: pitch, intensity and formants (analysis phase 205)**

For this experiment, N:10 sample files were considered. More specifically, N=10 sample files of natural voice $U1_{RV}$ -$U10_{RV}$ and N= 10 sample files of non-natural voice $U1_{SV}$ -$U10_{SV}$ considered, generated using the algorithm Hifi-GAN.

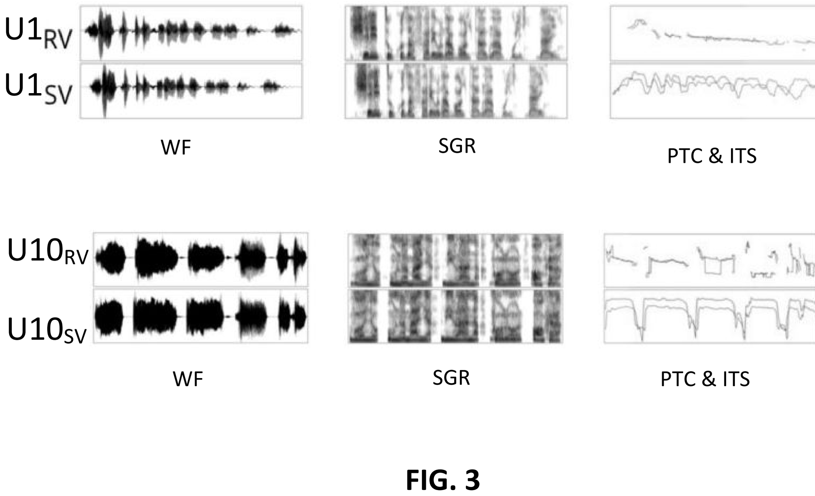

Figure 3 shows only the waveforms WF, spectrograms SGR, pitch trends PTC, and intensity trends ITS as calculated for the natural voice sample files $U1_{RV}$ and $U1_{SV}$ and for the non-natural voice sample files $U10_{RV}$ and $U10_{SV}$.

With the extraction of the pitch PTC from natural voices (files $U1_{RV}$ -$U10_{RV}$), an average value of 155 $\pm$ 33 Hz was found, while synthetic voices (files $U1_{SV}$ -$U10_{SV}$ ) show an average value of 155.20$\pm$ 35 Hz.

The percentage difference in pitch (in Hz) between the natural voice sample files and the non-natural voice sample files, calculated using the following formula (question: is this the difference between the mean pitches?):

$$Diff\,(\%) = \frac{pitch\,SV - pitch\,RV}{pitch\,RV\,x\,100}$$

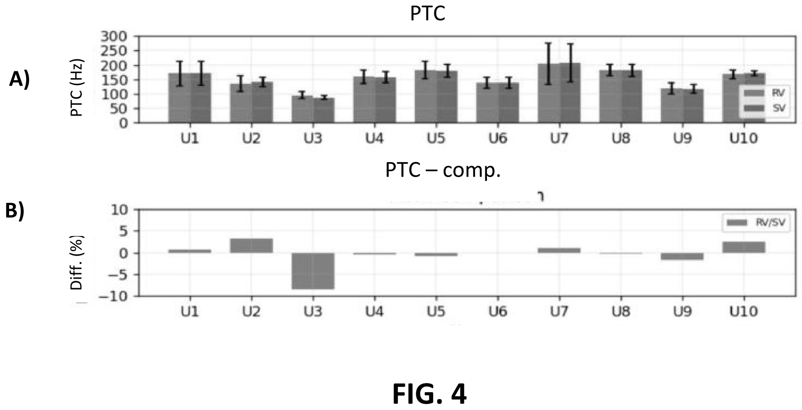

shows a difference range between natural and synthetic voices of $\pm$ 5%, with an average value of 1.94% (Figure 4). Figure 4A shows the pitch values calculated for each voice file and, for each pair of histograms, the left histogram refers to the natural voice (RV) and the right histogram refers to the non-natural voice (SV). Figure 4B shows the difference (PTC-comp.) in pitch for each pair of natural and non-natural voice files considered.

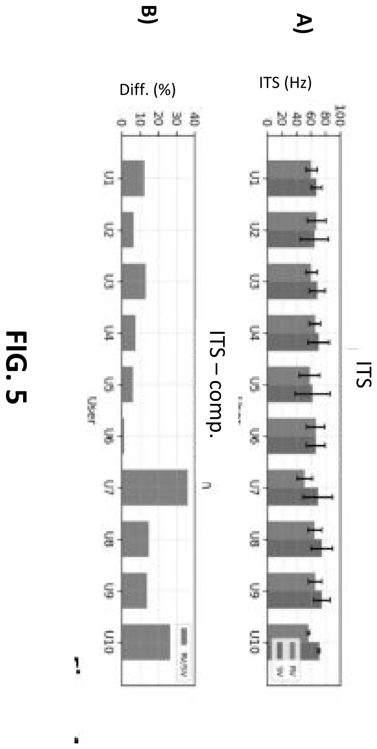

With regard to intensity ITS, natural voices have an average value of 60.93 $\pm$ 5.39 dB, while synthetic voices have an average value of 68.29 $\pm$ 4.04 dB, with a percentage difference of 12.84% (Figure 5).

It should be noted that while pitch, measured in Hz, showed a minimal and insignificant percentage difference between natural and synthetic voices in the dataset of files considered for the experiment, intensity, measured in dB, revealed a more marked discrepancy, with synthetic voices tending to have a higher intensity level than natural voices.

These results demonstrate that, although synthetic voices can approximate the characteristics of natural voices in terms of pitch in Hz, substantial differences in intensity can still exist.

Considering the formant FRM, it should be noted that this biomarker represents a resonance frequency (also called characteristic frequency) around which a spectrally rich sound shows a peak in amplitude. There are several formants in the human voice, due to the resonances of the vocal tract, a term used to describe the complex architecture of the ear, nose and throat cavities. The positions of the formants are partially modulatable at will, and this is precisely the mechanism of vocalisation and recognition of vowels.

Formants are indicated by the capital letter F, followed by an ordinal number starting from 1, in ascending order of frequency. As a first approximation, a specific vowel is identified by the ratio between the second and first formants: $F1$ and $F2$. The other formants define linguistic, dialectal and personal 'nuances'.

For the extraction of the first formant F1 and the second formant F2, attention was focused on the vowel 'a' extracted from specific words with the vowel positioned between two consonants. The selected portion of the vowel in all cases had an average length of between 100 and 150 milliseconds, thus ensuring consistent and reliable analysis between natural and non-natural voice samples.

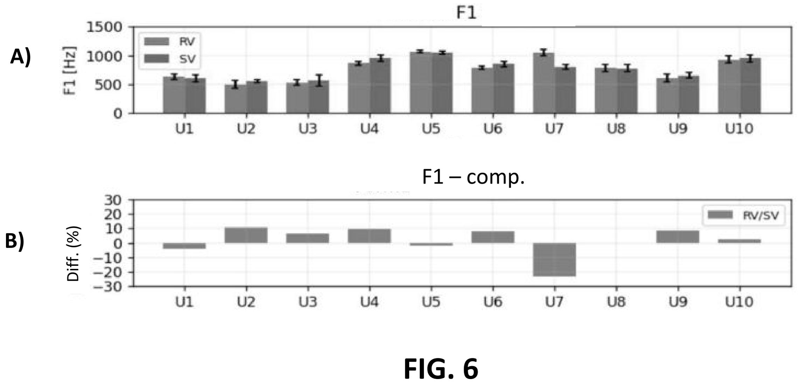

The average values F1 showed similarities between the natural and non-natural voice samples (774.71 and 776.02, respectively), with a percentage difference in the dataset ranging within $\pm$ 10%. Figure 6A shows the F2 formant values for each voice file: for each pair of histograms, the left histogram refers to the natural voice while the right histogram refers to the non-natural voice. Figure 6B shows the difference (F2-comp.) of the F2 formant for each pair of natural and non-natural voice files considered.

On the other hand, for the formant F2, the average values were 1485.68 for natural voices and 1496.67 for non-natural voices, with a percentage difference of $\pm$ 0.62%. Therefore, the first formant F1 appears to be more significant.

The experiment also took into account ten voices created using Italian (text-to-speech generators) $TTS_1$ -$TTS_{10}$. Similar to the natural and non-natural voice sample files, the text-to-speech voices were analysed in terms of pitch, intensity and formants. Specifically, the average values of the pitch, intensity and formant biomarkers were respectively: 162 $\pm$ 41 Hz, 62.64 $\pm$ 2.16 dB, 816 $\pm$ 110 (F1), and 1404 $\pm$ 99 (F2).

These results were statistically compared with those obtained for samples $U1_{RV}$ - $U10_{RV}$ nd for non-natural voice samples $U1_{SV}$ -$U10_{SV}$, in order to gain a greater understanding of the differences between synthetic and natural voices.

Statistical analysis of pitch, intensity, and formants biomarkers obtained from sample files $U1_{RV}$-$U10_{RV}$, $U1_{SV}$-$U10_{(SV)}$, and $TTS_1$-$TTS_{10}$ was performed using ANOVA (Analysis of Variance). The values were expressed as mean$\pm$ SD (i.e., standard deviation) and compared, and values with *p<0.1 were considered significant.

The data obtained from this experiment demonstrate that there is no statistically significant difference between the pitch of natural and synthetic voices. On the contrary, the intensity biomarker shows a significant difference between natural voice and synthetic voice generated using Hifi-GAN (**p<0.01). Even more pronounced is the difference between synthetic voices and voices generated using text-to-speech (TTS), which showed a ***p<0.001. In contrast, natural voices and text-to-speech voices are similar in terms of the intensity biomarker.

With regard to formants F1 and F2, the analysis confirmed similarities in the first formant F1 for all samples of real voice, synthetic voice and text-to-speech voice. However, the second formant F2 shows a *p<0.1 between real voice and text-to-speech voice and between synthetic voice and text-to-speech voice.

**2. Experiments: extraction and analysis (analysis phase 205) of the Mel Cepstral Distance (MCD) voice biomarker**

The biomarker MCD is derived from the analysis of cepstral frequency coefficients Mel (MFCC), which are a common technique used in voice signal analysis and speech recognition.

More specifically, considering the sample files $U1_{HV}$ -$U10_{RV}$ , $U1_{SV}$ -$U10_{SV}$ and $TTS_1$ -$TTS_{10}$ (already defined above), the coefficients MCFF were extracted from the spectrograms of the voice signal of the dataset samples, through the following steps:

1) pre-processing: the voice signal is divided into short time segments, , generally 20 to 40 milliseconds each;

2) Fourier transform - each segment is subjected to a Fourier transform to obtain its frequency representation;

3) Mel filtering: the spectral power values are transformed into a Mel frequency scale, which is a representation more similar to human perception of frequency;

4) logarithms: logarithms of the power values are calculated for each Mel frequency band;

5) discrete cosine transform (DCT): the DCT is applied to the logarithms of the power values, producing the Mel cepstral coefficients.

The Mel Cepstral Distance (MCD) biomarker is extrapolated from the spectral characteristics of the coefficients MFCC. As already indicated, this is a metric used to measure the distance between two vectors of Mel cepstral coefficients and can be calculated using different distance metrics, such as Euclidean distance or Mahalanobis distance.

MCD is an important parameter for distinguishing natural voices from synthetic ones because synthetic voices can produce Mel cepstral coefficients that differ significantly from natural voices. These differences can arise from variations in pitch, prosody, harmonics, and other vocal attributes that can be captured by MFCC coefficients. By measuring the distance between the MFCC vectors of a synthetic voice and a natural voice, it is possible to evaluate how similar or dissimilar the synthetic voice is to the natural voice in terms of vocal characteristics.

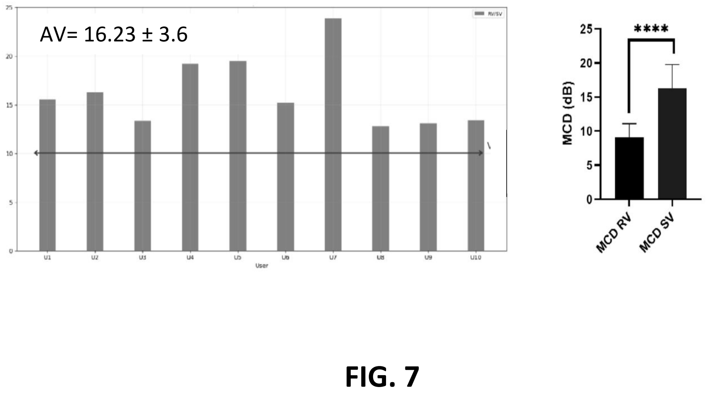

From the spectral characteristics of the coefficients MFCC, the values MCD were extrapolated. Figure 7 shows a comparison and statistical analysis of the values MCD for natural voice samples (MCD RV9) and synthetic voice samples (MCD SV). It can be seen that the values MCD of synthetic voices (average value AV: $16.23 \pm 3.6$) differ from those of natural voices (average value $9.09 \pm 2$). Statistical analysis, in this case using a *t-test,* showed a significant difference between natural and synthetic voices with a ****$p<0.0001$, proving to be a highly distinctive biomarker between real and synthetic voices.

### 3. Experiments: extraction and analysis (analysis phase 205) of the vocal biomarker 'Sound of Silence'

The Sound of Silence voice biomarker refers to a subtle variation in the acoustic properties of the human voice that emerges during moments of pause or silence within a voice recording. These intervals, usually overlooked in conventional analyses, can provide valuable information about the nature of the voice and its authenticity.

To identify and evaluate this characteristic, an innovative approach to voice data analysis was adopted. Using pause detection algorithms and signal processing techniques, moments of silence within both human and synthetic voice recordings were extracted and analysed. The results of this analysis showed that 'Sound of Silence' can be a biomarker for distinguishing between natural and synthetic voices. In particular, synthetic voices show a deviation during periods of silence (called digits) compared to natural human voices.

In order to evaluate the application of the 'Sound of Silence' biomarker to synthetic and natural voices, a probability distribution of moments of silence in the reference dataset ($U1_{RV}$ -$U10_{RV}$), thus obtaining a 'Benford law' tion of the natural voice file data $U1_{RV}$ -$U10_{RV}$ to be compared with the synthetic data ($U1_{SV}$ -$U10_{SV}$), then calculating the mean square error.

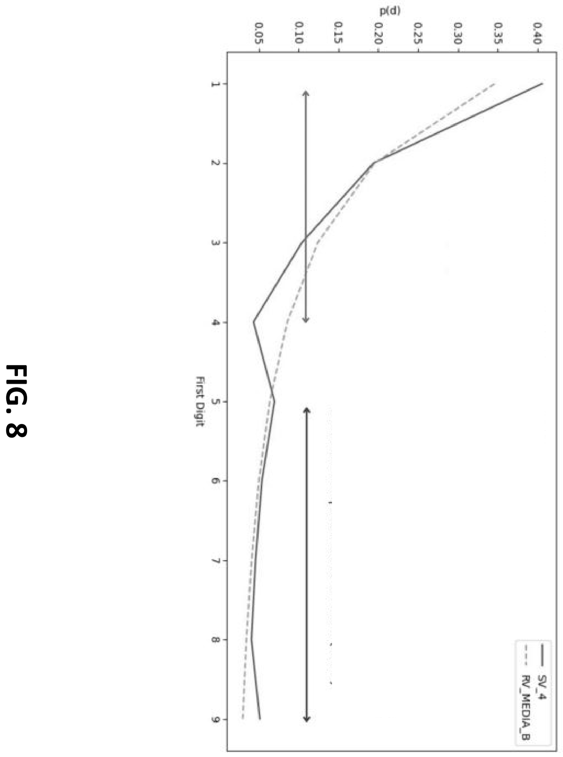

Figure 8 shows the probability distribution of the moments of silence of the reference population (real voice) of "The Sound of Silence" and the corresponding Benford law (dotted line) to be compared with the synthetic data (solid line). For the analysis of "The Sound of Silence", the first 4 periods of silence (digits 1-4) were taken into consideration, in which there is a tangible deviation from Benford's law between natural and synthetic voices, as can also be seen in Figure 8.

The comparison between Benford's law for the reference population (i.e. for the ten natural voice files considered) and the synthesised data relating to the synthetic voice files showed significant deviations in the digit range 1-4. In fact, artificial and non-natural micro-silences were detected. The synthesised data are, for example, the synthesised voices obtained from natural ones. Furthermore, the calculation of the mean square error (MSE) allows the 'threshold' value to be identified in order to distinguish natural voice from synthetic voice, and this threshold is MSE $\geq$ 0.001.

### 4. Extraction of text-to-speech data from foreign voices

In order to test the validity of method 100, different languages were included in the sample dataset of voices generated by text-to-speech: Italian, French, English, Russian, and Arabic.

As with natural voices, synthetic voices, and text-to-speech voices in Italian, the 'pitch' biomarker showed no differences (taking into account the reference dataset available).

Instead, the 'intensity' biomarker showed statistically significant differences between Italian text-to-speech vs. French text-to-speech and English text-to-speech *(*p<0.01).* The same result was obtained for Arabic text-to-speech vs. French text-to-speech and English text-to-speech.

The formants F1 and F2, which are harmonic frequencies characteristic of the human voice, showed significant differences between languages. In particular, F1 differs between Arabic and English (*** $p<0.001$), French and English (** p<0.01), and Italian-Russian and English-Russian (* p<;0.1). Similarly, the F2 format shows a * $p < 0.1$ between Italian vs. English, French, and Russian; a ** $p < 0.01$ between French-Russian, English-Russian, and Russian-Arabic.

In conclusion, these results obtained from the analysis of synthetic voices across different languages highlight interesting variations in pitch and intensity biomarkers, as well as in F1 and F2 formants.

Note that authentication method 100 and the related configuration method 200 can be implemented using software running on a computer capable of receiving and processing audio files. The computer can be, for example, a personal computer, a laptop, a smartphone, or other electronic device with a processor and adequate memory.

The method described is a highly efficient voice authentication technology and opens up new avenues for communications security, ensuring the integrity and authenticity of voices in critical contexts.

**APPENDIX**

Further information on the biomarkers mentioned in this description can be obtained from the documentation available/downloadable at the following web addresses:

- https://okayama.elsevierpure.com/en/publications/voice-conversion-through-vector-quantization-3
- https://ieeexplore.ieee.org/abstract/document/9955539
- https://ieeexplore.ieee.org/document/8461375
- https://arxiv.org/abs/1003.4083
- https://oxfordre.com/linguistics/display/10.1093/acrefore/9780199384655               .001.0001/acrefor e-9780199384655-e-419
- https://biomedeng.jmir.org/2024/1/e56245
- https://www.sciencedirect.com/science/article/abs/pii/S088523082300096 7?via%3Dihub
- https://speechresearch.github.io/fastspeech2/

**Claims**

1. Authentication method (100) of voice files, including:

   defining (101) a plurality of vocal biomarkers ($BM$ -$BM_{1M}$) chosen from the following types: pitch, intensity, formant, Mel Cepstral Distance, Sound of Silence;
   having (102) a voice file to be authenticated ($FAU_X$) and so as to reproduce a human voice,
   extracting (103) at least two voice biomarkers ($BM_1$-$BM_M$) from the voice file to be authenticated ($FAU_X$);
   calculating (104) from said at least two voice biomarkers ($BM_1$ -$BM_M$) an authentication index (INDX) representative of a probability that the voice file to be authenticated ($FAU_X$) is a natural voice file and having values within an authentication interval (INT) having one extreme indicative of a situation wherein the voice file to be authenticated ($FAU_{NRV}$) has a non-natural origin and another extreme indicative of a situation wherein the voice file to be authenticated ($FAU_{NV}$ ) has a natural origin.

2. Method (100) according to claim 1, wherein calculating (104) the authentication index (INDX) comprises performing a weighted combination of said at least two voice biomarkers ($BM_1$-$BM_2$)

3. Method (100) according to claim 2, whereby said combination comprises a weighted sum of at least two voice biomarkers ($BM_1$-$BM_2$).

4. Method (100) according to claim 1, in which:

   extracting (103) at least two voice biomarkers includes: extracting one voice biomarker for each of said types;
   calculating the authentication index (INDX) includes performing a weighted combination of each voice biomarker ($BM$ -$BM_{1M}$) of each of said types.

5. Method (100) according to claim 1, wherein extracting (103) at least two voice biomarkers ($BM$ -$BM_{1M}$) from the voice file to be authenticated ($FAU_X$) includes extracting at least said Mel Cepstral Distance and said Sound of Silence.

6. Method (100) according to claim 1, wherein said voice biomarker of the type formant e (FRM) comprises at least one of: first formant F1 and second formant F2.

7. Method (100) according to claim 1, including a configuration methodology (200) comprising:

- having (201) a plurality of natural voice sample files ($U1_{RV}$-$UN_{RV}$) and a plurality of non-natural voice sample files ($U1_{SV}$-$UN_{SV}$; $U1_{TTS}$-$UN_{TTS}$);
- defining (203) a voice biomarker to be analysed ($BM_j$) chosen from this plurality of voice biomarkers ($BM_1$-$BM_M$);
- calculating (204) a first plurality of values/trends ($BM_{j1R}$-$BM_{jNR}$) assumed by the biomarker to be analysed ($BM_j$) for each of the natural voice sample files ($U1_{RV}$-$UN_{RV}$) and a second plurality of values/trends ($BM_{j1S}$-$BM_{jNS}$) assumed by the biomarker to be analysed ($BM_j$) for each of the non-natural voice-sample files ($U1_{SV}$-$UN_{SV}$; $U1_{TTS}$-$UN_{TTS}$);
- performing an inferential statistical analysis (205) comparing the first plurality of values/trends ($BM_{j1R}$-$BM_{jNR}$) and the second plurality of values/ trends ($BM_{j1S}$-$BM_{jNS}$) in order to define how significant the biomarker to be analysed ($BM_j$) is for the purpose of discriminating between natural and non-natural voice files.

8. Method (100) according to claim 6, wherein said inferential statistical analysis (205) comprises an ANOVA, Anlysis of Variance, for the following types of analysis biomarkers: pitch, intensity, formants.

9. Method (100) according to claim 6, wherein said inferential statistical analysis (205) comprises performing a *t-test* at the first plurality of values/trends ($BM_{j1R}$-$BM_{jNR}$) and at the second plurality of values/trends ($BM_{j1S}$-$BM_{jNS}$), wherein the biomarker to be analysed ($BM_j$) is of the Mel Cepstral Distance type.

10. Method (100) according to claim 6, in which said inferential statistical analysis (205) comprises:

calculating a Benford-law for the first plurality of voice biomarker values ($BM_{j1R}$-$BM_{jNR}$)
calculating a mean square error between said Benford-law and data dependent on the second plurality of biomarkers ($BM_{j1S}$-$BM_{jNS}$);
in which the biomarker to be analysed ($BM_j$) is of the Sound of Silence type.

11. Human voice authentication system comprising:

at least one computer;
software that defines instructions which, when executed by at least one computer, implement the authentication method (100) of at least one of the preceding claims.

**FIG. 1**

100

101 — BM$_1$-BM$_M$

102 — FAU$_x$
FAU$_{RV}$?   FAU$_{NRV}$?

103 —
BM$_1$: PTC
BM$_2$: ITS
BM$_3$: FRM
BM$_4$: MCD
BM$_5$: SoS

104 — INDX(BM$_1$-BM$_M$)
INT, w$_1$-w$_M$
FAU$_{RV}$ / FAU$_{NRV}$

**FIG. 2**

$\underline{200}$

Box 201:
$U1_{RV}\text{-}UN_{RV}$
$U1_{SV}\text{-}UN_{SV}$
$U1_{TTS}\text{-}UN_{TTS}$

→ 202: PRE-PROC

→ 203: $BM_j$

→ 204:
$BM_{j1R}\text{-}BM_{jNR}$
$BM_{j1S}\text{-}BM_{jNS}$

→ 205: $TST\ (BM_{j1R}\text{-}BM_{jNR};\ BM_{j1S}\text{-}BM_{jNS})$
$S\text{-}INT_y \Longleftrightarrow p(BMj)_y$

**FIG. 3**

FIG. 4

FIG. 5

**FIG. 6**

**FIG. 7**

Europäisches
Patentamt

European
Patent Office

Office européen
des brevets

**EUROPEAN SEARCH REPORT**

**Application Number**

EP 25 19 7706

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CAMPI MARTA ET AL: "Machine Learning Mitigants for Speech Based Cyber Risk", IEEE ACCESS, IEEE, USA, vol. 9, 30 September 2021 (2021-09-30), pages 136831-136860, XP011882696, DOI: 10.2139/SSRN.3643826 | 1-4,6,7, 11 | INV.<br>G10L17/26<br>G10L17/10<br><br>ADD.<br>G06F21/32 |
| Y | * Table 3 * | 5,8,9 | G10L17/00 |
| A | * Sections II, III and IV * | 10 | H04W12/06<br>H04W12/12 |
| | ----- | | |
| Y | DANIELE MARI ET AL: "The Sound of Silence: Efficiency of First Digit Features in Synthetic Audio Detection", ARXIV.ORG, CORNELL UNIVERSITY LIBRARY, 201 OLIN LIBRARY CORNELL UNIVERSITY ITHACA, NY 14853, 6 October 2022 (2022-10-06), XP091335804, * Title * * Section 1 * | 5 | |
| | ----- | | |
| Y | MEFTAH ALI ET AL: "Emotional speech recognition: A multilingual perspective", 2016 INTERNATIONAL CONFERENCE ON BIO-ENGINEERING FOR SMART TECHNOLOGIES (BIOSMART), IEEE, 4 December 2016 (2016-12-04), pages 1-4, XP033052914, DOI: 10.1109/BIOSMART.2016.7835600 * abstract * | 8 | TECHNICAL FIELDS SEARCHED (IPC)<br><br>G10L<br>G06F<br>H04W |
| | ----- | | |
| | -/-- | | |

The present search report has been drawn up for all claims

| Place of search | Date of completion of the search | Examiner |
|---|---|---|
| Munich | 28 November 2025 | Müller, Achim |

EPO FORM 1503 03.82 (P04C01)

Europäisches
Patentamt

European
Patent Office

Office européen
des brevets

**EUROPEAN SEARCH REPORT**

**Application Number**

EP 25 19 7706

## DOCUMENTS CONSIDERED TO BE RELEVANT

| Category | Citation of document with indication, where appropriate, of relevant passages | Relevant to claim | |
|---|---|---|---|
| A | MAGDALENA IGRAS-CYBULSKA ET AL: "Structure of pauses in speech in the context of speaker verification and classification of speech type", EURASIP JOURNAL ON AUDIO, SPEECH, AND MUSIC PROCESSING, BIOMED CENTRAL LTD, LONDON, UK, vol. 2016, no. 1, 9 November 2016 (2016-11-09), pages 1-16, XP021267800, DOI: 10.1186/S13636-016-0096-7 * Page 5, right column, last paragraph * ----- | 8 | **CLASSIFICATION OF THE APPLICATION (IPC)** |
| Y | SINGH RITA ET AL: "Voice disguise by mimicry: deriving statistical articulometric evidence to evaluate claimed impersonation", IET BIOMETRICS, IEEE, MICHAEL FARADAY HOUSE, SIX HILLS WAY, STEVENAGE, HERTS. SG1 2AY, UK, vol. 6, no. 4, 1 July 2017 (2017-07-01), pages 282-289, XP006076405, ISSN: 2047-4938, DOI: 10.1049/IET-BMT.2016.0126 * Section 4, second paragraph * ----- | 9 | **TECHNICAL FIELDS SEARCHED (IPC)** |

The present search report has been drawn up for all claims

| Place of search | Date of completion of the search | Examiner |
|---|---|---|
| Munich | 28 November 2025 | Müller, Achim |